(19) Europäisches Patentamt
European Patent Office
Office européen des brevets

(11) **EP 4 553 111 A1**

(12) **EUROPEAN PATENT APPLICATION**
published in accordance with Art. 153(4) EPC

(43) Date of publication:
**14.05.2025 Bulletin 2025/20**

(21) Application number: **23835022.7**

(22) Date of filing: **03.07.2023**

(51) International Patent Classification (IPC):
*C08L 3/06* (2006.01)       *B29C 48/08* (2019.01)
*B29K 29/00* (2006.01)       *B29L 7/00* (2006.01)
*C08J 3/18* (2006.01)        *C08J 5/18* (2006.01)
*C08L 3/08* (2006.01)        *C08L 29/04* (2006.01)

(52) Cooperative Patent Classification (CPC):
B29C 48/08; C08J 3/18; C08J 5/18; C08L 3/06;
C08L 3/08; C08L 29/04

(86) International application number:
**PCT/IB2023/056879**

(87) International publication number:
**WO 2024/009201 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.07.2022 JP 2022107887
04.07.2022 JP 2022107893**

(71) Applicant: **Plantic Technologies LTD
Altona, VIC 3018 (AU)**

(72) Inventors:
• **TAKAWA, Shun
Tsukuba-shi, Ibaraki 305-0841 (JP)**
• **ENOMOTO, Keisuke
Tokyo 100-0004 (JP)**
• **NAITO, Kana
Tsukuba-shi, Ibaraki 305-0841 (JP)**
• **OTA, Masahiko
Kurashiki-shi, Okayama 713-8550 (JP)**
• **MCCAFFREY, Nicholas John
Altona, Victoria (AU)**

(74) Representative: **Müller-Boré & Partner
Patentanwälte PartG mbB
Friedenheimer Brücke 21
80639 München (DE)**

(54) **RESIN COMPOSITION**

(57)     The present invention relates to a resin composition comprising a modified starch (A), a polyvinyl alcohol-based resin (B), and a polyol plasticizer (C), in which a content of the polyol plasticizer (C) is 40 parts by mass or more and 150 parts by mass or less based on 100 parts by mass of a total of the modified starch (A) and the polyvinyl alcohol-based resin (B), the polyol plasticizer (C) comprises a polyol plasticizer (c1) having a Tg of 25°C or higher, and a water content after humidity conditioning at a temperature of 23°C and a relative humidity of 75% for 1 week is 17.0% by mass or less.

EP 4 553 111 A1

**Description**

TECHNICAL FIELD

The present patent application claims the priority of Japanese Patent Application No. 2022-107887 (filing date: July 4, 2022) and Japanese Patent Application No. 2022-107893 (filing date: July 4, 2022), entirety of which is incorporated herein by reference, under the Paris Convention.

The present invention relates to a resin composition comprising a modified starch, a polyvinyl alcohol-based resin, and a polyol plasticizer, and a film or sheet comprising a layer comprising the resin composition.

BACKGROUND ART

Conventionally, a resin composition comprising a modified starch and a polyvinyl alcohol-based resin has been widely used in packaging containers because of its biodegradability and high oxygen barrier properties (for example, Patent Document 1). In addition, a resin composition comprising a modified starch, a water-soluble polymer such as a polyvinyl alcohol-based resin, a polyol plasticizer, and polyethylene oxide is known as an injection moldable polymer easily suitable for medical or industrial products having biodegradability and water washability (for example, Patent Document 2).

PRIOR ART DOCUMENTS

PATENT DOCUMENTS

Patent Document 1: JP-A-2019-6900
Patent Document 2: JP-A-2014-28963

SUMMARY OF THE INVENTION

PROBLEMS TO BE SOLVED BY THE INVENTION

However, in the resin composition comprising a modified starch and a polyvinyl alcohol-based resin which can be used as a gas barrier material having biodegradability, it has been found that the conventional resin composition comprising a polyol plasticizer exhibits high oxygen barrier properties under low humidity, but exhibits a remarkable decrease in oxygen barrier properties under high humidity (for example, 75% RH) to which a food packaging film is exposed, and does not satisfy practical performance. In addition, such a resin composition may not be melted unless water is added, and it has been found that it is difficult to achieve both the meltability and the oxygen barrier properties under high humidity.

The present invention has been made in view of the above circumstances, and an object of the present invention is to provide a resin composition comprising a modified starch, a polyvinyl alcohol-based resin, and a polyol plasticizer, the resin composition being capable of suppressing a decrease in oxygen barrier properties under high humidity and being meltable without adding water, and a film or sheet comprising at least one layer comprising the resin composition.

MEANS FOR SOLVING PROBLEMS

As a result of intensive studies to solve the above problems, the present inventors have found that in a resin composition comprising a modified starch (A), a polyvinyl alcohol-based resin (B), and a polyol plasticizer (C), when a total of the modified starch (A) and the polyvinyl alcohol-based resin (B) is 100 parts by mass, a content of the polyol plasticizer (C) is 40 parts by mass or more and 150 parts by mass or less, the polyol plasticizer (C) comprises a polyol plasticizer (c1) having a Tg of 25°C or higher, and a water content after humidity conditioning at a temperature of 23°C and a relative humidity of 75% for 1 week is 17.0% by mass or less, whereby the above problems can be solved, leading to completion of the present invention. That is, the present invention includes the following forms.

[1] A resin composition comprising a modified starch (A), a polyvinyl alcohol-based resin (B), and a polyol plasticizer (C), wherein a content of the polyol plasticizer (C) is 40 parts by mass or more and 150 parts by mass or less based on 100 parts by mass of a total of the modified starch (A) and the polyvinyl alcohol-based resin (B), the polyol plasticizer (C) comprises a polyol plasticizer (c1) having a Tg of 25°C or higher, and a water content after humidity conditioning at a temperature of 23°C and a relative humidity of 75% for 1 week is 17.0% by mass or less.

[2] The resin composition according to [1], wherein a mass ratio (c1/C) of the polyol plasticizer (c1) to the polyol plasticizer (C) is 0.45 or more.

[3] The resin composition according to [1] or [2], wherein the modified starch (A) comprises a modified starch (A1) having a modified group modified with a hydrophilic compound having an SP value of more than 11.3.

[4] The resin composition according to [3], wherein an average amylose content of the modified starch (A1) is 50% by mass or more.

[5] The resin composition according to [3] or [4], wherein the modified starch (A1) is at least one selected from the group consisting of etherified starch having a hydroxyalkyl group having 2 to 6 carbon atoms and esterified starch having a carboxylic anhydride-modified group having 2 to 6 carbon atoms.

[6] The resin composition according to any one of [1] to [5], wherein the modified starch (A) comprises a modified starch (A2) having a modified group modified with a hydrophobic compound having an SP value of 11.3 or less.

[7] The resin composition according to [6], wherein the average amylose content of the modified starch (A2) is less than 50% by mass.

[8] The resin composition according to [6] or [7], wherein the modified starch (A2) is at least one selected from the group consisting of etherified starch having a glycidyl ether-modified group having 6 to 24 carbon atoms and esterified starch having a carboxylic anhydride-modified group having 6 to 24 carbon atoms.

[9] The resin composition according to any one of [6] to [8], wherein the modified starch (A2) has a weight average molecular weight of 200,000 or less.

[10] A film or sheet comprising at least one layer comprising the resin composition according to any one of [1] to [9].

EFFECTS OF THE INVENTION

According to the present invention, it is possible to provide a resin composition comprising a modified starch, a polyvinyl alcohol-based resin, and a polyol plasticizer, the resin composition being capable of suppressing a decrease in oxygen barrier properties under high humidity and being meltable without adding water, and a film or sheet comprising at least one layer comprising the resin composition.

EMBODIMENTS OF THE INVENTION

[Resin composition]

A resin composition of the present invention comprises a modified starch (A), a polyvinyl alcohol-based resin (B), and a polyol plasticizer (C), a content of the polyol plasticizer (C) is 40 parts by mass or more and 150 parts by mass or less based on 100 parts by mass of a total of the modified starch (A) and the polyvinyl alcohol-based resin (B), the polyol plasticizer (C) comprises a polyol plasticizer (c1) having a glass transition temperature (may be referred to as Tg) of 25°C or higher, and a water content after humidity conditioning at a temperature of 23°C and a relative humidity of 75% for 1 week is 17.0% by mass or less. In the present specification, the polyol plasticizer (c1) having a Tg of 25°C or higher may be referred to as "Tg ≥ 25°C polyol plasticizer (c1)", "polyol plasticizer (c1)", or "polyol (c1)", a mass ratio (c1/C) of the polyol plasticizer (c1) to the polyol plasticizer (C) may be simply referred to as "mass ratio (c1/C)", and the water content after humidity conditioning at a temperature of 23°C and a relative humidity of 75% for 1 week may be referred to as "water content under 23°C and 75% RH". The modified starch (A) and the polyvinyl alcohol-based resin (B) may be referred to as a component (A) and a component (B), respectively. The upper limit value and the lower limit value described in the present specification can be arbitrarily combined.

The present inventor has found that the content of the polyol plasticizer (C) comprising the Tg ≥ 25°C polyol plasticizer (c1) is 40 parts by mass or more and 150 parts by mass or less based on 100 parts by mass of the total of the modified starch (A) and the polyvinyl alcohol-based resin (B), and the water content under 23°C and 75% RH is 17.0% by mass or less, so that unexpectedly, melt moldability can be improved while a decrease in oxygen barrier properties under high humidity (for example, 23°C, 75% RH) is suppressed. The reason for this is not clear, but it is presumed that both low water absorbency under high humidity and improvement in melt moldability by the polyol plasticizer (C) and the like can be exhibited. In addition, since the resin composition of the present invention comprises a modified starch (A1) and a modified starch (A2) described later, there is a tendency that both melt moldability and oxygen barrier properties under high humidity can be achieved at a high level. In the present specification, whether or not the resin composition is "meltable" can be determined by whether or not the resin composition can be melt-molded without addition of water, and for example, can be evaluated by whether or not the resin composition can be compression molded (or press molded) as described in Examples. Such meltable properties are referred to as meltability or melt moldability. In the present specification, film formability is a property showing surface uniformity of a film (or sheet) obtained by melt-molding a resin composition, and can be evaluated, for example, by judging whether or not a surface of a film (or sheet) obtained after extrusion-molding the resin composition is uniform without unevenness as described in Examples.

[Modified starch (A)]

The resin composition of the present invention comprises the modified starch (A). The starch as a raw material of the modified starch (A) may be, for example, starch derived from corn, cassava, potato, sweet potato, sago, tapioca, sorghum, bean, bracken, lotus, Trapa japonica, wheat, rice, oat, arrowroot, pea, and the like. Among them, from the viewpoint of an amylose content, the starch as a raw material of the modified starch (A) is preferably starch derived from corn or cassava, and more preferably starch derived from corn. The modified starch (A) may comprise one kind or two or more kinds of starches. The modified starch (A) includes a modified group in which a hydroxyl group contained in the starch is modified, and the modified group is preferably a hydrophilic compound-modified group and/or a hydrophobic compound-modified group described later from the viewpoint of being able to reduce an increase in water content under 23°C and 75% RH of the resin composition, to suppress the decrease in oxygen barrier properties under high humidity, and to enhance the melt moldability and the film formability.

<Modified starch (A1)>

The modified starch (A) preferably comprises the modified starch (A1) having a modified group modified with a hydrophilic compound having an SP value of more than 11.3. The modified group modified with the hydrophilic compound (the modified group is also referred to as a modified group with a hydrophilic compound or a hydrophilic compound-modified group) is a group in which a hydroxyl group is modified by a reaction between a reactive group of the hydrophilic compound and the hydroxyl group contained in starch, and is preferably bonded to starch by etherification, esterification, or amidation. When the modified starch (A1) as described above is contained, biodegradability and mechanical strength can be enhanced, and aging of the modified starch after molding can be inhibited. In the present specification, the SP value indicates a solubility parameter calculated by Fedors' equation (Polym. Eng. Sci., 14 [2], 147 (1974)).

The SP value of the hydrophilic compound is preferably 12.0 or more, more preferably 12.5 or more, still more preferably 13.0 or more, and preferably 15.5 or less, more preferably 15.0 or less. When the SP value of the hydrophilic compound is within the above range, the mechanical strength can be increased.

Examples of the hydrophilic compound include alkylene oxides having 2 to 6 carbon atoms, such as ethylene oxide, propylene oxide (SP value: 13.2), and butylene oxide; halogenated carboxylic acids having 2 to 4 carbon atoms, such as chloroacetic acid; alkyl halides having 2 to 6 carbon atoms, such as methyl bromide; carboxylic anhydrides having 2 to 6 carbon atoms, such as maleic anhydride and phthalic anhydride; oxoacid salts such as sodium nitrate and sodium phosphate; 2-diethylaminoethyl chloride; and 2,3-epoxypropyltrimethylammonium chloride. Among them, from the viewpoint of being able to enhance reactivity to starch and the mechanical strength, at least one selected from the group consisting of alkylene oxides having 2 to 6 carbon atoms and carboxylic anhydrides having 2 to 6 carbon atoms is preferable.

Examples of the starch as a raw material of the modified starch (A1) include those exemplified above as the starch as a raw material of the modified starch (A). The modified starch (A1) may comprise one or two or more kinds of hydrophilic compound-modified groups, and the modified starch (A) may comprise one or two or more kinds of modified starches (A1).

In a preferred embodiment of the present invention, the average amylose content of the modified starch (A1) is preferably 50% by mass or more, more preferably 55% by mass or more, still more preferably 60% by mass or more, even more preferably 65% by mass or more, particularly preferably 70% by mass or more, and preferably 90% by mass or less. When the amylose content is within the above range, an increase in water content under 23°C and 75% RH can be reduced, the decrease in oxygen barrier properties under high humidity can be suppressed, and the melt moldability and the film formability can be enhanced. In the present specification, the amylose content can be measured by, for example, the iodine coloring method described in "Starch 50 No. 4 158-163 (1998)". The average amylose content indicates the amylose content of one type of modified starch (A1) when one type of modified starch (A1) is used, and is a weighted average of the amylose content of two or more types of modified starches (A1) when two or more types of modified starches (A1) are used. Thus, for example, when two or more types of modified starches (A1) are used and the average amylose content is 50% by mass or more, the modified starch (A1) having an amylose content of less than 50% by mass may be contained.

Specifically, the modified starch (A1) is preferably at least one type selected from the group consisting of etherified starch, esterified starch, cationized starch, and crosslinked starch.

Examples of the etherified starch include alkyl-etherified starches such as methyl etherified starches, preferably alkyl-etherified starches having 2 to 6 carbon atoms; carboxyalkyl etherified starches such as carboxymethyl etherified starches, preferably carboxymethyl etherified starches having 2 to 6 carbon atoms; etherified starches (hydroxyalkyl-etherified starches) having a hydroxyalkyl group such as a hydroxyethylene group, a hydroxypropylene group, or a hydroxybutylene group, preferably etherified starches having a hydroxyalkyl group having 2 to 5 carbon atoms; and allyl etherified starch, preferably allyl etherified starch having 2 to 6 carbon atoms. Hydroxyalkyl etherified starch having 2 to 6 carbon atoms can be obtained, for example, by reaction of an alkylene oxide having 2 to 6 carbon atoms such as ethylene oxide, propylene oxide, or butylene oxide with starch.

Examples of the esterified starch include esterified starches having a carboxylic acid-modified group such as esterified starches having a structural unit derived from acetic acid (also referred to as esterified starches having a structural unit derived from carboxylic acid); esterified starch having a carboxylic anhydride-modified group such as esterified starch having a structural unit derived from maleic anhydride, esterified starch having a structural unit derived from phthalic anhydride, and esterified starch having a structural unit derived from octenylsuccinic anhydride (also referred to as esterified starch having a structural unit derived from carboxylic anhydride); esterified starch having a structural unit derived from an oxoacid such as nitric acid esterified starch, phosphoric acid esterified starch, or urea phosphoric acid esterified starch; xanthogenic acid esterified starch; and acetoacetic acid esterified starch.

Among them, from the viewpoint of being able to enhance the melt moldability and the film formability, the modified starch (A1) is preferably at least one selected from the group consisting of an etherified starch having a hydroxyalkyl group and an esterified starch having a carboxylic anhydride-modified group, and more preferably at least one selected from the group consisting of an etherified starch having a hydroxyalkyl group having 2 to 6 carbon atoms and an esterified starch having a carboxylic anhydride-modified group having 2 to 6 carbon atoms. In the modified starch (A1), an average number of modified hydroxyl groups per glucose unit [referred to as a degree of substitution (DS)] is preferably 0.05 to 2.

In a preferred embodiment of the present invention, a weight average molecular weight (may be referred to as Mw) of the modified starch (A1) is preferably 200,000 or more, more preferably 250,000 or more, still more preferably 300,000 or more, even more preferably 350,000 or more, particularly preferably 400,000 or more, and preferably 800,000 or less, more preferably 650,000 or less, still more preferably 550,000 or less. When the Mw of the modified starch (A1) is equal to or more than the above lower limit, the increase in water content under 23°C and 75% RH can be reduced, the decrease in oxygen barrier properties under high humidity can be suppressed, and the mechanical strength can be increased. When the Mw is equal to or less than the above upper limit, the melt moldability and the film formability can be enhanced. The weight average molecular weight of the modified starch (A1) can be measured using GPC (gel permeation chromatography), for example, by the method described in Examples.

As the modified starch (A1), a commercially available product may be used, or a predetermined starch may be modified with a hydrophilic compound using a conventional method to produce the modified starch (A1). Examples of representative commercial products of the modified starch (A1) include ECOFILM (registered trademark) and GELOSE (registered trademark) A939 available from Ingredion Incorporated and National Starch and Chemical Company.

In one embodiment of the present invention, the content of the modified starch (A1) is preferably 20% by mass or more, more preferably 30% by mass or more, and preferably 100% by mass or less, more preferably 80% by mass or less, still more preferably 65% by mass or less, even more preferably 50% by mass or less with respect to the mass of the modified starch (A). When the content of the modified starch (A1) is equal to or more than the above lower limit, the mechanical strength tends to be high. When the content of the modified starch (A1) is equal to or less than the above upper limit, the melt moldability and the film formability can be enhanced.

<Modified starch (A2)>

The modified starch (A) preferably comprises the modified starch (A2) having a modified group modified with a hydrophobic compound having an SP value of 11.3 or less. The modified group modified with the hydrophobic compound (the modified group may be referred to as a modified group with a hydrophobic compound or a hydrophobic compound-modified group) is a group in which a hydroxyl group is modified by a reaction between a reactive group of the hydrophobic compound and the hydroxyl group contained in starch, and is preferably bonded to starch by etherification, esterification, or amidation. When the modified starch (A2) as described above is contained, the water absorbency is reduced, so that the increase in water content under 23°C and 75% RH can be reduced, the decrease in oxygen barrier properties under high humidity can be suppressed, and the melt moldability and the film formability can be enhanced.

The SP value of the hydrophobic compound is preferably 11.0 or less, more preferably 10.8 or less, still more preferably 10.5 or less, and preferably 8.0 or more, more preferably 8.4 or more, still more preferably 8.8 or more. When the SP value of the hydrophobic compound is within the above range, the water absorbency of the resin composition is reduced, so that the increase in water content under 23°C and 75% RH can be reduced, the decrease in oxygen barrier properties under high humidity can be suppressed, and the melt moldability and the film formability can be enhanced.

The hydrophobic compound preferably comprises at least one reactive group selected from the group consisting of, for example, a halogen group, a halohydrin group, an epoxy group, a glycidyl group, an acid anhydride group, and an amino group.

When the hydrophobic compound is bonded to starch by etherification, that is, an ether bond, the reactive group contained in the hydrophobic compound may be, for example, a halogen group, a halohydrin group, an epoxy group, or a glycidyl group, and the hydrophobic compound is preferably a hydrophobic compound having 6 to 24 carbon atoms. Specific examples of the hydrophobic compound include cetyl bromide and lauryl bromide; epoxidized soybean fatty alcohols and epoxidized linseed fatty alcohols; glycidyl ethers having 2 to 24 carbon atoms, preferably glycidyl ethers having 6 to 24 carbon atoms, such as allyl glycidyl ether, propyl glycidyl ether, butyl glycidyl ether, decane glycidyl ether, lauryl phenyl glycidyl ether, myristoyl glycidyl ether, cetyl glycidyl ether, palmityl glycidyl ether, stearyl glycidyl ether, and linolyl glycidyl ether.

When the hydrophobic compound is bonded to starch by esterification, that is, the ester bond, the reactive group contained in the hydrophobic compound may be, for example, an acid anhydride group, and the hydrophobic compound is preferably a carboxylic acid anhydride having 6 to 24 carbon atoms, preferably 7 to 20 carbon atoms. Specific examples of the carboxylic acid anhydride include alkanoic acid carboxylic acid anhydrides such as octanoic acid acetic anhydride, decanoic acid acetic anhydride, lauric acid acetic anhydride, and myristic acid acetic anhydride; and alkyl or alkenyl dicarboxylic anhydrides such as alkyl or alkenyl succinic anhydrides, alkyl or alkenyl maleic anhydrides. As the alkyl or alkenyl dicarboxylic anhydride, octenylsuccinic anhydride (SP value: 10.4), nonylsuccinic anhydride, decylsuccinic anhydride, dodecenylsuccinic anhydride, octenylmaleic anhydride, nonylmaleic anhydride, decylmaleic anhydride, and dodecenylmaleic anhydride are preferable, and octenylsuccinic anhydride or octenylmaleic anhydride is more preferable.

When the hydrophobic compound is bonded to starch by amidation, that is, an amide bond, the reactive group contained in the hydrophobic compound may be, for example, an amino group. As the hydrophobic compound, an aliphatic amine containing a saturated or unsaturated hydrocarbon group having 6 to 24 carbon atoms can be suitably used, and the aliphatic amine may contain a branched chain, and is preferably linear. Specific examples of the aliphatic amine include n-dodecylamine, n-hexadecylamine, n-octadecylamine, cocoamine, tallowamine, hydrogenated N-tallow-1,3-diaminopropane, N-hydrogenated tallow-1,3-diaminopropane, and N-oleyl-1,3-diaminopropane.

Among them, the hydrophobic compound is preferably at least one selected from the group consisting of glycidyl ether having 6 to 24 carbon atoms and a carboxylic acid anhydride having 6 to 24 carbon atoms from the viewpoint of being able to reduce the increase in water content under 23°C and 75% RH of the resin composition, to suppress the decrease in oxygen barrier properties under high humidity, and to enhance the melt moldability and the film formability.

Examples of the starch as a raw material of the modified starch (A2) include those exemplified above as the starch as a raw material of the modified starch (A). The modified starch (A2) may comprise one or two or more kinds of hydrophobic compound-modified groups, and the modified starch (A) may comprise one or two or more kinds of modified starches (A2).

In a preferred embodiment of the present invention, the average amylose content of the modified starch (A2) is preferably less than 50% by mass, more preferably 40% by mass or less, still more preferably 30% by mass or less, even more preferably 20% by mass or less, particularly preferably 10% by mass or less, particularly more preferably 5% by mass or less, and preferably 0.1% by mass or more, more preferably 0.5% by mass or more. When the amylose content is within the above range, the melt moldability and the film formability can be enhanced. The average amylose content indicates the amylose content of one type of modified starch (A2) when one type of modified starch (A2) is used, and is a weighted average of the amylose content of two or more types of modified starches (A2) when two or more types of modified starches (A2) are used. Thus, for example, when two or more types of modified starches (A2) are used and the average amylose content is less than 50% by mass, the modified starch (A2) having an amylose content of 50% by mass or more may be contained. In the modified starch (A2), the average number of modified hydroxyl groups per glucose unit [referred to as the degree of substitution (DS)] is preferably 0.05 to 2.

Specifically, the modified starch (A2) is preferably at least one selected from the group consisting of, for example, etherified starch, esterified starch, and amidated starch, and more preferably at least one selected from the group consisting of etherified starch having 6 to 24 carbon atoms, esterified starch having 6 to 24 carbon atoms, and amidated starch having 6 to 24 carbon atoms.

The etherified starch is preferably an etherified starch having a hydrophobic compound-modified group, and examples of the hydrophobic compound include those exemplified above as the hydrophobic compound used when the hydrophobic compound is bound to starch by etherification. The esterified starch is preferably an esterified starch having a hydrophobic compound-modified group, and examples of the hydrophobic compound include those exemplified above as the hydrophobic compound used when the hydrophobic compound is bound to starch by esterification. The amidated starch is preferably an amidated starch having a hydrophobic compound-modified group, and examples of the hydrophobic compound include those exemplified above as the hydrophobic compound used when the hydrophobic compound is bound to starch by amidation.

Among them, the modified starch (A2) is preferably at least one selected from the group consisting of etherified starch having a glycidyl ether-modified group having 6 to 24 carbon atoms (etherified starch having a structural unit derived from glycidyl ether) and esterified starch having a carboxylic anhydride-modified group having 6 to 24 carbon atoms (esterified starch having a structural unit derived from a carboxylic anhydride) from the viewpoint of being able to reduce the increase in water content under 23°C and 75% RH of the resin composition, to suppress the decrease in oxygen barrier

EP 4 553 111 A1

properties under high humidity, and to enhance the melt moldability and the film formability.

In an embodiment of the present invention, the weight average molecular weight of the modified starch (A2) is preferably 200,000 or less, more preferably 190,000 or less, and still more preferably 180,000 or less, and may be 175,000 or less. Furthermore, in an embodiment of the present invention, the weight average molecular weight of the modified starch (A2) is preferably 170,000 or less, more preferably 140,000 or less, still more preferably 100,000 or less, even more preferably 70,000 or less, and may be 50,000 or less. The lower limit of the weight average molecular weight of the modified starch (A2) is preferably 5,000 or more, more preferably 10,000 or more, and still more preferably 20,000 or more. When the Mw of the modified starch (A2) is equal to or less than the above upper limit, the melt moldability and the film formability can be enhanced, and when the Mw of the modified starch (A2) is equal to or more than the above lower limit, the increase in water content under 23°C and 75% RH can be reduced, and the decrease in oxygen barrier properties under high humidity can be suppressed. The weight average molecular weight of the modified starch (A2) can be measured using GPC (gel permeation chromatography), for example, by the method described in Examples.

As the hydrophobically modified starch (A2), a commercially available product may be used, or a predetermined starch may be modified with a hydrophobic compound using a conventional method to produce the modified starch (A2).

The modified starch (A) can comprise one or two or more kinds of hydrophobically modified starches (A2). In an embodiment of the present invention, two or more kinds of hydrophobically modified starches (A2) are comprised, and preferably, two or more kinds of modified starches (A2) having different Mws may be comprised from the viewpoint of being able to enhance the melt moldability and the film formability of the resin composition.

In an embodiment of the present invention, the content of the modified starch (A2) is preferably 0% by mass or more, more preferably 20% by mass or more, sill more preferably 30% by mass or more, even more preferably 45% by mass or more, particularly preferably 55% by mass or more, and preferably 80% by mass or less, more preferably 70% by mass or less with respect to the mass of the modified starch (A). When the content of the modified starch (A2) is equal to or more than the above lower limit, the melt moldability and the film formability can be enhanced. When the content of the modified starch (A2) is equal to or less than the above upper limit, the mechanical strength of the resin composition can be increased.

In an embodiment of the present invention, when the resin composition of the present invention comprises the modified starch (A1) and the modified starch (A2), a ratio [(A2)/(A1)] of the modified starch (A2) to the modified starch (A1) is preferably 0.1 or more, more preferably 0.5 or more, still more preferably 0.8 or more, even more preferably 1.2 or more, particularly preferably 1.5 or more, particularly more preferably 1.8 or more, and preferably 10 or less, more preferably 5 or less, and still more preferably 3 or less. When the ratio of the modified starch (A2) to the modified starch (A1) is equal to or more than the above lower limit, the melt moldability and the film formability can be enhanced. When the content is equal to or less than the above upper limit, the mechanical strength of the resin composition can be increased.

[Polyvinyl alcohol-based resin (B)]

The resin composition of the present invention comprises the polyvinyl alcohol-based resin (B). The polyvinyl alcohol-based resin (B) has a degree of saponification of preferably 80 mol% or more, more preferably 85 mol% or more, still more preferably 90 mol% or more, even more preferably 95 mol% or more, and preferably 99.8 mol% or less, more preferably 99.5 mol% or less. When the degree of saponification of the polyvinyl alcohol (B) is within the above range, the mechanical strength of the resin composition can be increased, the increase in water content under 23°C and 75% RH can be reduced, and the decrease in oxygen barrier properties under high humidity can be suppressed. In the present specification, the degree of saponification means a molar fraction of hydroxyl groups to the total of hydroxyl groups and ester groups in the polyvinyl alcohol-based resin (B), and can be measured in accordance with JIS K 6726.

The polyvinyl alcohol-based resin (B) may be a polyvinyl alcohol having a vinyl alcohol unit or a modified polyvinyl alcohol containing a monomer unit other than the vinyl alcohol unit (also referred to as a constituent unit derived from another monomer). Examples of another monomer unit include a monomer unit derived from an ethylenically unsaturated monomer. Examples of the ethylenically unsaturated monomer include $\alpha$-olefins such as ethylene, propylene, n-butene, isobutylene, and 1-hexene; acrylic acids and salts thereof; unsaturated monomers having an acrylic acid ester group; methacrylic acids and salts thereof; unsaturated monomers having a methacrylic acid ester group; acrylamide, N-methylacrylamide, N-ethylacrylamide, N,N-dimethylacrylamide, diacetoneacrylamide, acrylamidepropanesulfonic acid and a salt thereof, acrylamidepropyldimethylamine and a salt thereof (e.g., quaternary salt); methacrylamide, N-methylmethacrylamide, N-ethylmethacrylamide, methacrylamidepropanesulfonic acid and a salt thereof, methacrylamidepropyldimethylamine and a salt thereof (e.g., quaternary salt); vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; cyanidated vinyls such as acrylonitrile and methacrylonitrile; halogenated vinyls such as vinyl chloride and vinyl fluoride; halogenated vinylidenes such as vinylidene chloride and vinylidene fluoride; allyl compounds such as allyl acetate, 2,3-diacetoxy-1-allyloxypropane, and allyl chloride; unsaturated dicarboxylic acids such as maleic acid, itaconic acid, and fumaric acid, and a salt or an ester thereof; vinylsilyl compounds such

7

as vinyltrimethoxysilane; isopropenyl acetate; vinyl ester monomers such as vinyl formate, vinyl acetate, vinyl propionate, vinyl butyrate, vinyl isobutyrate, vinyl pivalate, vinyl versatate, vinyl caproate, vinyl calrylate, vinyl laurate, vinyl palmitate, vinyl stearate, vinyl oleate, and vinyl benzoate. Among these other monomer units, a constituent unit derived from an α-olefin (α-olefin unit) such as ethylene or propylene is preferable from the viewpoint of being able to reduce the water absorbency of the resin composition to reduce the increase in water content under 23°C and 75% RH, to suppress the decrease in oxygen barrier properties under high humidity, and to enhance the melt moldability and the film formability. A monomer unit derived from an unsaturated monomer and not saponified is also included in the other monomer unit. The content of the other monomer unit contained in the modified polyvinyl alcohol is preferably 1 mol% or more, more preferably 3 mol% or more, still more preferably 5 mol% or more, even more preferably 7 mol% or more, and preferably 20 mol% or less, more preferably 15 mol% or less, and may be 13 mol% or less or 10 mol% or less. When the content of the other monomer unit is within the above range, the increase in water content under 23°C and 75% RH can be reduced, the decrease in oxygen barrier properties under high humidity can be suppressed, and the melt moldability and the film formability can be enhanced.

In an embodiment of the present invention, the polyvinyl alcohol-based resin (B) is preferably at least one selected from the group consisting of polyvinyl alcohol and ethylene-modified polyvinyl alcohol, and more preferably ethylene-modified polyvinyl alcohol, from the viewpoint of being able to suppress the decrease in oxygen barrier properties under high humidity and to enhance the melt moldability and the film formability. When the ethylene-modified polyvinyl alcohol is contained, the water content under 23°C and 75% RH can be reduced. In the ethylene-modified polyvinyl alcohol, the content of the ethylene unit can be selected from the same range as the content of the other monomer units. When the content of the ethylene unit is within the above range, the increase in water content under 23°C and 75% RH can be reduced, the decrease in oxygen barrier properties of the resin composition under high humidity can be suppressed, and the melt moldability and the film formability can be enhanced. The content of the ethylene unit can be measured using NMR or the like, and for example, can be measured by the method described in Examples.

A method of producing the polyvinyl alcohol-based resin (B) is not particularly limited, and examples thereof include a method in which a vinyl alcohol monomer and optionally the other monomer are copolymerized, and the obtained copolymer is saponified and converted into a vinyl alcohol unit. Examples of a polymerization manner upon copolymerization include batch polymerization, semi-batch polymerization, continuous polymerization, and semi-continuous polymerization. Examples of the polymerization method include known methods such as a mass polymerization method, a solution polymerization method, a suspension polymerization method, and an emulsion polymerization method. For saponification of the copolymer, known methods can be applied. For example, the copolymer can be saponified in a state in which the copolymer is dissolved in alcohol or water-containing alcohol. The alcohol that can be used at this time is preferably a lower alcohol such as methanol or ethanol.

A viscosity average polymerization degree (may be referred to as the polymerization degree) of the polyvinyl alcohol-based resin (B) is preferably 200 or more, more preferably 220 or more, still more preferably 300 or more, and preferably 3,000 or less, more preferably 2,500 or less, still more preferably 2,000 or less, even more preferably 1,600 or less, particularly preferably 900 or less, particularly more preferably 600 or less. When the polymerization degree is equal to or more than the above lower limit, the decrease in oxygen barrier properties under high humidity can be suppressed and the mechanical strength can be improved. When the polymerization degree is equal to or less than the above upper limit, the melt moldability and the film formability can be enhanced, and the decrease in oxygen barrier properties under high humidity can be suppressed. The polymerization degree of the polyvinyl alcohol-based resin (B) can be measured in accordance with JIS-K 6726, and specifically, the polymerization degree of the polyvinyl alcohol-based resin (B) is determined from the following formula from a limiting viscosity [η] (dl/g) measured in water at 30°C after re-saponification and purification of the polyvinyl alcohol-based resin (P: viscosity average polymerization degree).

$$P = ([\eta] \times 10^3/8.29)(1/0.62)$$

[Polyol plasticizer (C)]

The resin composition of the present invention comprises the polyol plasticizer (C), the content of the polyol plasticizer (C) is 40 parts by mass or more and 150 parts by mass or less based on 100 parts by mass of the total of the modified starch (A) and the polyvinyl alcohol-based resin (B), and the polyol plasticizer (C) further comprises the Tg ≥ 25°C polyol plasticizer (c1). The resin composition of the present invention having the above configuration can enhance the melt moldability while suppressing the decrease in oxygen barrier properties under high humidity. On the other hand, when the content of the polyol plasticizer (C) is out of the above range, the oxygen barrier properties under high humidity tends to be insufficient. The polyol plasticizer (C) is preferably a sugar alcohol.

In the resin composition of the present invention, the content of the polyol plasticizer (C) is preferably 45 parts by mass or more, more preferably 50 parts by mass or more, still more preferably 55 parts by mass or more, even more preferably 60 parts by mass or more, and preferably 130 parts by mass or less, more preferably 110 parts by mass or less, based on 100 parts by mass of the total of the modified starch (A) and the polyvinyl alcohol-based resin (B). When the content of the polyol plasticizer (C) is equal to or more than the above lower limit, the melt moldability and the film formability of the resin composition can be enhanced, and when the content of the polyol plasticizer (C) is the above upper limit or less, the decrease in oxygen barrier properties under high humidity can be suppressed.

<Polyol plasticizer (c1)>

The polyol plasticizer (c1) is a polyol having a Tg of 25°C or higher. In general, when the polyol plasticizer is added to the resin composition comprising the modified starch and the polyvinyl alcohol-based resin for the purpose of enhancing the melt moldability, crystallinity is reduced, and thus the oxygen barrier properties particularly under high humidity are deteriorated. On the other hand, in the present invention, the Tg $\geq$ 25°C polyol plasticizer (c1) is contained such that the water content under 23°C and 75% RH is 17.0% by mass or less, whereby not only the melting point of the resin composition is lowered to enhance the melt moldability, but also unexpectedly the decrease in oxygen barrier properties under high humidity can be suppressed. The polyol plasticizer (c1) can be used alone or in combination of two or more.
The Tg of the polyol plasticizer (c1) is preferably 30°C or higher, more preferably 35°C or higher, still more preferably 40°C or higher, even more preferably 45°C or higher, and preferably 150°C or lower, more preferably 130°C or lower, still more preferably 100°C or lower, even more preferably 80°C or lower, particularly preferably 60°C or lower. When the Tg of the polyol plasticizer (c1) is equal to or more than the above lower limit, the increase in water content under 23°C and 75% RH can be reduced, and the decrease in oxygen barrier properties under high humidity can be suppressed. When the Tg of the polyol plasticizer (c1) is equal to or less than the above upper limit, the moldability and the film formability can be enhanced. The Tg of the polyol plasticizer (c1) can be measured using a differential scanning calorimeter, for example, by the method described in Example.
The polyol plasticizer (c1) is not particularly limited as long as it has a Tg of 25°C or higher, is compatible with the modified starch (A) and the polyvinyl alcohol-based resin (B), and has an effect of lowering the melting point, and examples thereof include polyhydric alcohols such as maltitol, trehalose, mannitol, and lactitol. These can be used alone or in combination of two or more. Among them, from the viewpoint of being able to achieve both excellent oxygen barrier properties and melt moldability, at least one selected from the group consisting of maltitol, trehalose and lactitol is preferable, maltitol and/or lactitol are/is more preferable, and maltitol is still more preferable.
In the resin composition of the present invention, the mass ratio (c1/C) of the Tg $\geq$ 25°C polyol plasticizer (c1) to the polyol plasticizer (C) may be 0.45 or more or 0.50 or more, preferably 0.55 or more, more preferably 0.60 or more, still more preferably 0.65 or more, even more preferably 0.70 or more, particularly preferably 0.75 or more, and particularly more preferably 0.80 or more, and may be 0.85 or more, 0.90 or more, or 0.95 or more. When the mass ratio (c1/C) is equal to or more than the above lower limit, the increase in water content under 23°C and 75% RH can be reduced, and the decrease in oxygen barrier properties under high humidity can be suppressed. The mass ratio (c1/C) is 1.00 or less and may be 0.97 or less. When the mass ratio (c1/C) is, for example, 0.45 or more or 0.50 or more, preferably 0.55 or more, the reason why the above effect can be obtained is not clear; however, it is presumed that the polyol plasticizer (c1) has an effect of enhancing the melt moldability while suppressing an increase in water absorbency of the resin composition.

<Polyol plasticizer (c2)>

In the resin composition of the present invention, the polyol plasticizer (C) may comprise a polyol plasticizer (c2) having a Tg of less than 25°C or having no Tg (this polyol plasticizer may be referred to as "Tg < 25°C polyol plasticizer (c2)", "polyol plasticizer (c2)", or "polyol (c2)"). When the Tg < 25°C polyol plasticizer (c2) is comprised, while the melt moldability can be enhanced, the oxygen barrier properties under high humidity tend to be deteriorated. The polyol plasticizer (c2) can be used alone or in combination of two or more.
The Tg of the polyol plasticizer (c2) is preferably 20°C or lower, more preferably 15°C or lower, still more preferably 10°C or lower, and even more preferably 5°C or lower, and is preferably -100°C or higher, more preferably -80°C or higher, still more preferably -60°C or higher, even more preferably -40°C or higher, and particularly preferably -20°C or higher. When the Tg of the polyol plasticizer (c2) is equal to or more than the above lower limit, the decrease in oxygen barrier properties under high humidity can be suppressed, and when the Tg of the polyol plasticizer (c2) is equal to or less than the above upper limit, the melt moldability and the film formability of the resin composition can be enhanced. The Tg of the polyol plasticizer (c2) can be measured using a differential scanning calorimeter, for example, by the method described in Example.
The polyol plasticizer (c2) is not particularly limited as long as it is a compound capable of lowering the Tg or melt viscosity of the modified starch (A) and the polyvinyl alcohol-based resin (B), and examples thereof include polyhydric alcohols such as sorbitol, xylitol, glycerin, and diglycerin; diols such as 1,3-butanediol and 2,3-butanediol; glycols such as ethylene glycol, diethylene glycol, triethylene glycol, tetraethylene glycol, polyethylene glycol, polypropylene glycol, trimethylene glycol, tetramethylene glycol, pentamethylene glycol, hexamethylene glycol, and propylene glycol; glycerin derivatives obtained by adding ethylene oxide, propylene oxide, or the like to polyhydric alcohol such as sorbitol, xylitol, glycerin, or diglycerin; pentaerythritol, saccharides, and polyethers; phenol derivatives such as bisphenol A and bisphenol S; amide compounds such as N-methylpyrrolidone; and trimethylolpropane, diglycerin, and 3-methyl-1,3,5 pentanetriol. These can be used alone or in combination of two or more. Among them, a polyhydric alcohol is preferable, at least one selected from the group consisting of sorbitol, xylitol, and glycerin is preferable, and sorbitol is more preferable from the viewpoint of being able to enhance the melt moldability and the film formability of the resin composition.

In the resin composition of the present invention, the mass ratio (c2/C) of the Tg < 25°C polyol plasticizer (c2) to the polyol plasticizer (C) is preferably less than 0.45, more preferably 0.40 or less, still more preferably 0.35 or less, even more preferably 0.30 or less, particularly preferably 0.20 or less, and particularly more preferably 0.15 or less. When the mass ratio (c2/C) is equal to or less than the above upper limit, the decrease in oxygen barrier properties under high humidity can be suppressed. The mass ratio (c2/C) is 0 or more.

[Resin composition]

The resin composition of the present invention comprises 40 to 150 parts by mass of the polyol plasticizer (C) containing the Tg ≥ 25°C polyol plasticizer (c1), in addition to the modified starch (A) and the polyvinyl alcohol-based resin (B), based on 100 parts by mass of the total of the component (A) and the component (B), and has a water content of 17.0% by mass or less under 23°C and 75% RH, and thus can suppress the decrease in oxygen barrier properties under high humidity and can melt without adding water. In addition, in a preferred embodiment of the present invention, the resin composition of the present invention can exhibit excellent melt moldability and film formability in addition to the oxygen barrier properties under high humidity. The resin composition is also excellent in biodegradability. Thus, the resin composition of the present invention can be suitably used as a material for food packaging, containers, and the like.

When the water content under 23°C and 75% RH of the resin composition is more than 17.0% by mass, suppression of the decrease in oxygen barrier properties under high humidity tends to be insufficient. The water content under 23°C and 75% RH of the resin composition of the present invention is 17.0% by mass or less, preferably 16.0% by mass or less, more preferably 15.9% by mass or less, still more preferably 15.5% by mass or less, even more preferably 15.0% by mass or less, particularly preferably 14.5% by mass or less, particularly more preferably 13.5% by mass or less, and particularly still more preferably 13.0% by mass or less. When the water content is equal to or less than the above upper limit, low water absorption performance can be exhibited even under high humidity, and the decrease in oxygen barrier properties under high humidity can be suppressed. The water content under 23°C and 75% RH is 0% by mass or more, and may be 5% by mass or more or 10% by mass or more. The water content is a water content measured at 130°C for 30 minutes using a heating and drying moisture content meter after humidity conditioning for 1 week under the condition of a temperature of 23°C/a relative humidity of 75%, and can be measured, for example, by the method described in Examples. The water content under 23°C and 75% RH of the resin composition of the present invention can be adjusted by, for example, the molecular weight and average amylose content of the modified starch (A1), the molecular weight and average amylose content of the modified starch (A2), the type and SP value of the hydrophobic compound, the degree of saponification of the polyvinyl alcohol-based resin (B), the content of the ethylene-modified polyvinyl alcohol in the component (B) and an ethylene modification amount thereof, the Tg, type and content (mass ratio (c1/C) and the like) of the polyol plasticizer (c1), and the like.

The content of the modified starch (A) is preferably 40 parts by mass or more, more preferably 45 parts by mass or more, still more preferably 48 parts by mass or more, and preferably 98 parts by mass or less, more preferably 95 parts by mass or less, still more preferably 85 parts by mass or less, even more preferably 80 parts by mass or less, based on 100 parts by mass of the total of the modified starch (A) and the polyvinyl alcohol-based resin (B). When the content of the modified starch (A) is equal to or more than the above lower limit, the biodegradability can be enhanced, and when the content of the modified starch (A) is equal to or less than the above upper limit, the melt moldability and the film formability can be enhanced while the decrease in oxygen barrier properties under high humidity is suppressed.

The content of the polyvinyl alcohol-based resin (B) is preferably 2 parts by mass or more, more preferably 5 parts by mass or more, still more preferably 15 parts by mass or more, even more preferably 20 parts by mass or more, and preferably 60 parts by mass or less, more preferably 55 parts by mass or less, still more preferably 52 parts by mass or less, based on 100 parts by mass of the total of the modified starch (A) and the polyvinyl alcohol-based resin (B). When the content of the polyvinyl alcohol-based resin (B) is equal to or more than the above lower limit, the melt moldability and the film formability can be enhanced while the decrease in oxygen barrier properties under high humidity is suppressed, and when the content of the polyvinyl alcohol-based resin (B) is equal to or less than the above upper limit, the biodegradability can be enhanced. In particular, when the polyvinyl alcohol-based resin (B) is ethylene-modified polyvinyl alcohol, the content thereof is preferably 5 parts by mass or more, more preferably 15 parts by mass or more, still more preferably 20 parts by mass or more, may be preferably 30 parts by mass or more, 40 parts by mass or more, or 45 parts by mass or more, preferably 70 parts by mass or less, and may be preferably 60 parts by mass or less, or 55 parts by mass or less, based on 100 parts by mass of the total of the modified starch (A) and the polyvinyl alcohol-based resin (B).

In the resin composition of the present invention, a total ratio of the modified starch (A) and the polyvinyl alcohol-based resin (B) is preferably 10% by mass or more, more preferably 20% by mass or more, sill more preferably 30% by mass or more, even more preferably 40% by mass or more, particularly preferably 50% by mass or more, and preferably 70% by mass or less, more preferably 65% by mass or less with respect to the mass of the resin composition. When the total ratio of the component (A) and the component (B) is equal to or more than the above lower limit, the decrease in oxygen barrier properties under high humidity can be suppressed, and when the total ratio of the component (A) and the component (B) is equal to or less than the above upper limit, the melt moldability and the film formability of the resin composition can be enhanced.

The resin composition of the present invention may further comprise a fatty acid having 12 to 22 carbon atoms and/or a fatty acid salt thereof. Examples of the fatty acid having 12 to 22 carbon atoms and a fatty acid salt thereof include stearic acid, calcium stearate, sodium stearate, palmitic acid, lauric acid, myristic acid, linoleic acid, and behenic acid. Among them, stearic acid, calcium stearate, and sodium stearate are preferable from the viewpoint of processability. A fatty acid having 12 to 22 carbon atoms and a fatty acid salt thereof can be used alone or in combination of two or more thereof.

When the resin composition of the present invention comprises a fatty acid having 12 to 22 carbon atoms and/or a fatty acid salt thereof, the content in the resin composition is preferably 0.01 to 3% by mass, more preferably 0.03 to 2% by mass, and still more preferably 0.1 to 1% by mass with respect to the mass of the resin composition. When the content of the fatty acid having 12 to 22 carbon atoms and/or the fatty acid salt thereof is within the above range, it tends to be advantageous in terms of processability.

The resin composition of the present invention may further comprise clay. Examples of the clay include synthetic and natural layered silicate clays such as montmorillonite, bentonite, beidellite, mica, hectorite, saponite, nontronite, sauconite, vermiculite, ledikite, magadite, kenyaite, stevensite, and volkonskoite. The clays can be used alone or in combination of two or more.

When the resin composition of the present invention comprises clay, the content in the resin composition is preferably 0.1 to 5% by mass, more preferably 0.1 to 3% by mass, and still more preferably 0.5 to 2% by mass with respect to the mass of the resin composition. When the content of the clay is within the above range, it tends to be advantageous in terms of transparency and strength.

The resin composition of the present invention may comprise a plasticizer other than the polyol plasticizer. Examples of the other plasticizer include water, epoxidized linseed oil, epoxidized soybean oil, tributyl citrate, acetyl triethyl citrate, glyceryl triacetate, and a plasticizer resin.

The resin composition of the present invention may further comprise additives such as fillers, processing stabilizers such as a copper compound, weather resistance stabilizers, coloring agents, ultraviolet absorbing agents, heat stabilizers, light stabilizers, antioxidants, antistatic agents, flame-retardants, lubricants, perfumes, foaming agents, deodorants, bulking agents, releasing agents, mold releasing agents, reinforcing agents, fungicides, antiseptics, and crystallization rate retardants as necessary as long as the objects and effects of the present invention are not impaired.

In the resin constituting the resin composition of the present invention, a ratio (total ratio) of the modified starch (A) and the polyvinyl alcohol-based resin (B) is preferably 80% by mass or more, more preferably 90% by mass or more, still more preferably 95% by mass or more, even more preferably 98% by mass or more, particularly preferably 99% by mass or more, and may be 99.9% by mass or more or 99.99% by mass or more. The resin constituting the resin composition of the present invention may comprise only the modified starch (A) and the polyvinyl alcohol-based resin (B). In the resin composition of the present invention, a ratio (total ratio) of the modified starch (A), the polyvinyl alcohol-based resin (B), and the polyol plasticizer (C) is preferably 80% by mass or more, more preferably 90% by mass or more, still more preferably 95% by mass or more, even more preferably 98% by mass or more, particularly preferably 99% by mass or more, and may be 99.9% by mass or more or 99.99% by mass or more.

In a preferred embodiment of the present invention, the resin composition of the present invention is excellent in melt moldability, and thus has a low melt viscosity. A complex viscosity of the resin composition of the present invention at 190°C and 10 rad/s is preferably 10,500 Pa·s or less, more preferably 9,000 Pa·s or less, still more preferably 8,000 Pa·s or less, even more preferably 7,000 Pa·s or less, particularly preferably 6,000 Pa·s or less, particularly more preferably 5,000 Pa·s or less, and preferably 500 Pa·s or more, more preferably 1,000 Pa·s or more. When the complex viscosity is within the above range, the melt moldability and the film formability of the resin composition can be enhanced. The complex viscosity can be measured using a viscoelasticity measuring device, and for example, can be measured by the method described in Examples. The complex viscosity can be used as an index for evaluation of the film formability, and when the complex viscosity is large, the film formability tends to be low, and when the complex viscosity is small, the film formability tends to be high.

In a preferred embodiment of the present invention, oxygen permeability (cc·20 $\mu$m/(m$^2$·day·atm)) of the resin composition of the present invention at a temperature of 23°C and a relative humidity of 75% is preferably 70 or less, more preferably 60 or less, still more preferably 50 or less, even more preferably 40 or less, particularly preferably 20 or less, particularly more preferably 15 or less, and particularly still more preferably 10 or less. When the oxygen permeability at a temperature of 23°C and a relative humidity of 75% is equal to or less than the above upper limit, excellent oxygen barrier properties under high humidity can be exhibited. The oxygen permeability can be measured using a gas permeability measurement device after humidity conditioning for 1 week under the condition of a temperature of 23°C/a relative humidity of 75%, is a permeation amount when the thickness is converted to 20 μm, and can be measured by, for example, the method described in Examples.

The resin composition of the present invention may be in the form of a pellet, a film, or a sheet.

[Method of producing resin composition]

A method of producing the resin composition of the present invention is not particularly limited, and preferably comprises at least a step (1) of mixing the modified starch (A), the polyvinyl alcohol-based resin (B), and the plasticizer (C) to obtain a mixture, a step (2) of extruding the mixture, and a step (3) of cooling and drying the extruded mixture.

The step (1) is a step of mixing at least the modified starch (A), the polyvinyl alcohol-based resin (B), and the plasticizer (C), and other components, for example, the above-described additives can be optionally mixed together.

The step (1) is usually performed using an extruder. In the extruder, shear stress is applied to each component by a screw, and the components are homogeneously mixed while being heated by application of external heat to a barrel.

As the extruder, for example, a twin screw extruder can be used. The twin screw extruder may be either co-rotating or counter-rotating. A screw diameter may be, for example, 15 to 150 mm, and a ratio L/D ratio of an extruder length (L) to a screw diameter (D) may be, for example, 20 to 50. The rotation speed of the screw is preferably 80 rpm or more, and more preferably 100 rpm or more. Extrusion molding pressure is preferably 5 bar (0.5 MPa) or more, and more preferably 10 bar (1.0 MPa) or more. Each component can be introduced directly into the extruder. These components may be premixed using a mixer and introduced into the extruder.

In the step (1), it is preferable to add water from the viewpoint of enhancing mixing properties of the resin composition. An amount of water to be added is preferably 0.1% by mass or more, more preferably 1% by mass or more, still more preferably 10% by mass or more, even more preferably 15% by mass or more, particularly preferably 20% by mass or more, and preferably 50% by mass or less, more preferably 45% by mass or less, and still more preferably 40% by mass or less with respect to the mass of the mixture. The mass of the mixture is the mass of the mixture containing water. In the step (1), water may be introduced at an initial stage of extrusion, and the water may be introduced before the heating temperature is reached, for example, at 100°C or lower. The modified starch (A) is subjected to cooking treatment by a combination of moisture, heat, and shear stress, and can be gelatinized (gelled). By introducing water, the polyvinyl alcohol-based resin (B) can be dissolved, the resin composition can be softened, and a modulus and brittleness can be reduced.

In the step (1), cooking treatment is performed by heating to a temperature of preferably 100°C or higher and 160°C or lower, more preferably 115°C or higher and 150°C or lower. Here, the cooking treatment is a treatment for crushing and gelatinizing starch grains. The heating can be performed by applying heat to the barrel of the extruder from the outside. The heating can be performed to a target temperature by applying a stepwise changed temperature to each barrel. When the cooking treatment is performed at a temperature of 120°C or higher, it is advantageous in terms of processability.

In order to prevent foaming, it is preferable that the mixture subjected to the cooking treatment is pushed toward a die while the temperature is lowered to preferably 80 to 120°C, and more preferably 85 to 110°C. By exhausting air from the barrel, foaming can be prevented, and moisture can be removed.

A residence time in the extruder can be set according to a temperature profile and a screw speed, and is preferably 1 to 2.5 minutes.

In the step (2) of extruding the mixture, the melted mixture which has been pushed in the extruder while being melted and kneaded is extruded from the die. The temperature of the die is preferably 70 to 120°C, and more preferably 75 to 110°C.

In the step (3) of cooling and drying the extruded mixture (melted product), the mixture (melted product) can be extruded into a film shape (or sheet shape) or a strand shape.

When the mixture is extruded into a film shape (or sheet shape), the mixture can be extruded from a die for forming a film, and then cooled and dried while being wound with a winding roller. It is preferable to cool the mixture between the die and the roller so as to prevent the mixture from attaching to the roller. For drying, the roll may be warmed or dehumidified air may be supplied during winding. In the case of a blowing-tube method, the dehumidified air can be used in order to inflate the film when the film is released from the die. By accompanying talc in the air stream, blocking of the film can be also prevented.

When the mixture is extruded into a strand shape, the mixture is extruded from a strand nozzle having a plurality of holes, and the strand is cut with a rotation cutter, so that the strand can be formed into a pellet shape. In order to prevent agglutination of pellets, the hot air, the dehumidified air or an infrared heater is applied, while vibration is applied periodically or regularly, so that the moisture in the pellet can be removed.

The resin composition of the present invention, preferably a pelletized resin composition can be molded into a molded product having any shape such as a film, a sheet, a tube, or a bottle by melt molding. Examples of the melt molding method include conventional methods such as an extrusion molding method, an injection molding method, an extrusion film formation method from a T-die, an inflation film formation method, a compression molding method, a transfer molding method, a reinforced plastic molding method, a hollow molding method, a press molding method, a blow molding method, a calender molding method, a foaming molding method, a vacuum molding method, and a pneumatic molding method.

In an embodiment of the present invention, when the resin composition (for example, a pelletized resin composition) is compression molded, a molded product can be produced using a conventional compression molding machine. The temperature at the time of compression molding can be appropriately adjusted according to the application, and may be, for example, 100 to 300°C, preferably 120 to 250°C, 180 to 220°C, or 190 to 215°C. The load may be, for example, 50 to 200 kgf/cm$^2$, preferably 70 to 150 kgf/cm$^2$.

In an embodiment of the present invention, when the resin composition (for example, a pelletized resin composition) is extrusion molded, a molded product can be produced using a conventional extrusion molding machine. Examples of the extruder include a single-screw extruder and a twin screw extruder. The screw diameter of the extruder is, for example, 15 to 150 mm, the ratio L/D ratio of the extruder length (L) to the screw diameter (D) is, for example, 15 to 50, and the rotation speed of the screw is preferably 80 rpm or more, and more preferably 100 rpm or more. The cylinder temperature in the extruder may be, for example, 180 to 220°C, preferably 190 to 210°C. In another embodiment of the present invention, as the extrusion conditions, the same method as that described in the section of [Method of producing resin composition] may be adopted.

[Film or sheet]

The present invention includes a film or sheet comprising at least one layer comprising a resin composition (sometimes referred to as a resin layer). Since the film or sheet of the present invention comprises the layer comprising the resin composition of the present invention, it is excellent in oxygen barrier properties and biodegradability under high humidity. In addition, in a preferred embodiment of the present invention, since the film or sheet of the present invention comprises a resin layer formed from a resin composition excellent in film formability, the film or sheet can have a uniform surface without unevenness.

The film or sheet of the present invention may be a single layer film or sheet comprising a resin layer, or may be a multilayer film or sheet comprising two or more resin layers, or comprising one or more resin layers and one or more other layers. When two or more resin layers are comprised, the compositions of the resin compositions forming the resin layers may be the same or different.

The other layer is not particularly limited, and examples thereof include paper, a polymer film, and an adhesive. The paper is not particularly limited, and examples thereof include kraft paper, high-quality paper, simili paper, glassine paper, parchment paper, synthetic paper, white paperboard, manila board, milk carton board, cup paper, ivory paper, and white silver paper.

The polymer film is not particularly limited, and examples thereof include polyethylene terephthalate (PET) films, biaxially stretched polypropylene (BOPP) films, polyethylene (PE) films (preferably low-density polyethylene (LDPE) films), polylactic acid (PLA) films, polybutylene succinate (PBS) films, polyhydroxyalkanoic acid (PHA) films, and polybutylene adipate terephthalate (PBAT) films.

When the film or sheet of the present invention is a single layer film or a single layer sheet, as described in the section of [Method of producing resin composition] above, the film or sheet may be produced by extruding the resin composition from an extruder into a film shape (or a sheet shape), or after producing a pelletized resin composition, the film or sheet may be produced using the above-mentioned melt molding method.

When the film or sheet of the present invention is a multilayer film or a multilayer sheet, examples of the multilayer film or multilayer sheet include those having the following layer configuration. Paper/resin layer; polymer film/resin layer; paper/adhesive/resin layer; polymer film/adhesive/resin layer; polymer film/adhesive/resin layer/paper/adhesive/polymer film.

In an embodiment of the present invention, a method of producing a multilayer film having, for example, a paper/resin layer or a polymer film/resin layer in this order is preferably a method comprising a step of covering a polymer film or paper conveyed by a winding machine with the resin composition using an extruder.

Examples of the extruder include a single-screw extruder and a twin screw extruder. The screw diameter of the extruder is, for example, 15 to 150 mm, the ratio L/D ratio of the extruder length (L) to the screw diameter (D) is, for example, 15 to 50, and the rotation speed of the screw is preferably 80 rpm or more, and more preferably 100 rpm or more. The cylinder temperature in the extruder may be, for example, 180 to 220°C, preferably 190 to 210°C.

The resin composition introduced into the extruder is plasticized and discharged from a die outlet. On the other hand, the paper or the polymer film is conveyed by a winding machine, preferably a roller type winding machine. A multilayer film is obtained by coating the conveyed paper or polymer film with the resin composition discharged from the die outlet. The obtained multilayer film may be pressure-bonded to a base material with, for example, a pressure roll or the like and wound into a roll shape with a winding machine.

In a preferred embodiment of the present invention, since the resin composition is excellent in melt moldability, the resin composition can be melt-molded without adding water as a plasticizer to an extruder, for example, and since the water content of the resin composition is low, the resin composition may not be subjected to a drying step at the time of film formation.

A multilayer film or a multilayer sheet containing an adhesive may be produced, for example, by laminating paper, a polymer film, and a resin layer with an adhesive interposed therebetween.

The thickness of the film or sheet in the present invention can be appropriately selected according to the number of layers and applications, and is not limited, but is preferably 5 to 1,000 $\mu$m, and more preferably 10 to 500 $\mu$m. The thickness of the film or sheet can be measured by a thickness meter, for example, by the method described in Examples.

EXAMPLES

Hereinafter, the present invention will be described in detail with reference to Examples, but the present invention is not limited thereto.

<Test method>

(1) Oxygen permeability under high humidity

In accordance with JIS K 7126-1: 2006, after humidity conditioning of the single layer sheets obtained in Examples and Comparative Examples for 1 week under the condition of a temperature of 23°C/a relative humidity of 75%, an oxygen permeability amount was measured under the condition of a temperature of 23°C/a relative humidity of 75% using a gas permeability measurement device (GTR-30 XAK manufactured by GTR TEC Corporation), and the oxygen permeation amount when the measured thickness of the single layer sheet was converted to 20 $\mu$m was calculated as the oxygen permeability (cc·20 $\mu$m/(m$^2$·day·atm)).

(2) Water content under high humidity

The single layer sheets obtained in Examples and Comparative Examples were subjected to humidity conditioning for 1 week under the condition of a temperature of 23°C/a relative humidity of 75%, and then heated at 130°C for 30 minutes using a heating and drying moisture content meter (MX-50 manufactured by Mettler Toledo) to measure the water content (% by mass).

(3) Complex viscosity

The complex viscosity (Pa·s) at 190°C and 10 rad/s of the single layer sheets obtained in Examples and Comparative Examples was measured under the condition of 1 Hz using a viscoelasticity measuring device (DISCOVERY HR-2 manufactured by TA Instruments).

(4) Film formability

The resin compositions obtained in Examples and Comparative Examples were charged into a twin screw extruder (KZW manufactured by TECHNOVEL CORPORATION) having a diameter of Φ15 mm, melted and kneaded at a screw rotation speed of 200 rpm and a cylinder temperature of 200°C, and extruded from a die having a width of 150 mm to prepare a single layer film having a thickness of about 50 $\mu$m. A film surface of the obtained film was visually observed, and when the film surface was uniform without unevenness, the film surface was evaluated as A, and when the film surface was uneven and was not uniform, the film surface was evaluated as B.

(5) Weight average molecular weight of modified starch (A)

The weight average molecular weight of the modified starch (A) was calculated by drawing a calibration curve with pullulan using GPC (Gel permeation chromatography, manufactured by Tosoh Corporation, HLC-8320 GPC).

(6) SP value of compound used for modification of modified starch (A)

The SP value of the compound used for modifying the modified starch (A) was calculated by Fedors' equation described in Polym. Eng. Sci., 14 [2], 147 (1974).

(7) Glass transition temperature (Tg) of polyol plasticizer (C)

The glass transition temperature (Tg) of the polyol plasticizer (C) was measured at a temperature rising rate of 10°C/min under nitrogen using a differential scanning calorimeter (DSC 822 e manufactured by Mettler Toledo).

(8) Thickness

The thicknesses of the single layer sheets obtained in Examples and Comparative Examples and the single layer film prepared in the evaluation of the film formability were measured using a micrometer (BMD-25 MX manufactured by Mitutoyo Corporation).

<Modified starch (A1-1)>

- ECOFILM (registered trademark): Corn starch modified with propylene oxide, amylose content 70% by mass, available from Ingredion

The SP value of propylene oxide is 13.2.

<Hydrophobically modified starch (A2-1)>

- National 912 (registered trademark): Corn starch modified with octenylsuccinic acid, weight average molecular weight 170,000, amylose content 1% by mass, available from Ingredion.

<Hydrophobically modified starch (A2-2)>

- CAPSUL (registered trademark): Corn starch modified with octenylsuccinic acid, weight average molecular weight 32,000, amylose content 1% by mass, available from Ingredion.

The SP value of octenylsuccinic acid is 10.4.

Production Example 1

[Production of polyvinyl alcohol (B-1)]

Into a separable flask equipped with a reflux condenser, a stirrer, a thermometer, a nitrogen inlet tube, a charging port for a post-added liquid, and a pump, 1,300 g of vinyl acetate and 500 g of methanol were charged. After the flask was purged with nitrogen, the temperature of the solution in the flask was adjusted to 60°C. To the stirred solution was added 0.5 g of 2,2'-azobis(isobutyronitrile) to initiate polymerization. When a polymerization ratio reached 30% after 2.3 hours from the start of polymerization, 1000 g of methanol was added to stop the polymerization. Methanol vapor was blown into the polymerization paste to remove an unreacted vinyl acetate monomer, thereby obtaining a methanol solution of polyvinyl acetate. To 400 g of a methanol solution adjusted so that the concentration of polyvinyl acetate was 25% by mass by adding methanol to the obtained solution, 11.6 g of a 10% by mass methanol solution of sodium hydroxide was added under stirring, and saponification was performed at 40°C. The gel was pulverized by a pulverizer at the time when a gelled product was generated as the saponification reaction proceeded, and the gel was subjected to a saponification reaction for 1 hour in total, and then neutralized by adding 1,000 g of methanol. Thereafter, 1,000 g of methanol was added to white solid polyvinyl alcohol obtained by filtration and left and washed at room temperature for 3 hours. The above washing operation was repeated three times, and then a polyvinyl alcohol obtained by centrifugal deliquoring was dried in a dryer at 70°C for two days to obtain a polyvinyl alcohol (B-1) having a viscosity average polymerization degree of 1,700 and a saponification degree of 99.2 mol%. The viscosity average polymerization degree and the saponification degree were measured in accordance with JIS K 6726.

Production Example 2

[Production of ethylene-modified polyvinyl alcohol (B-2)]

To a continuous polymerization tank equipped with a reflux condenser, a raw material supply line, a reaction liquid extraction line, a thermometer, a nitrogen inlet, an ethylene inlet, and a stirring blade, 626 L/hr of vinyl acetate, 216 L/hr of methanol, and 30.3 L/hr of a 1% methanol solution of n-propyl peroxydicarbonate as an initiator were continuously supplied using a metering pump. An ethylene pressure in the polymerization tank was adjusted to 0.69 MPa. A polymerization liquid was continuously taken out from the continuous polymerization tank so that a liquid level in the polymerization tank was constant. The polymerization ratio at an outlet of the continuous polymerization tank was adjusted to 67%. The residence time in the continuous polymerization tank was 5 hours. The temperature at the outlet of the continuous polymerization tank was 60°C. The polymerization liquid was recovered from the continuous polymerization tank, and methanol vapor was introduced into the polymerization liquid while heating the polymerization liquid at 75°C in a warm water bath to remove residual vinyl acetate, thereby obtaining a methanol solution of an ethylene-modified vinyl ester polymer. Next, at 40°C, the saponification reaction was carried out for 1 hour using sodium hydroxide at a ratio of 0.5% by mass of the water content of a system subjected to the saponification step and a molar ratio of 0.02 to the ethylene-modified vinyl ester polymer as a saponification catalyst. The obtained polymer was immersed in methanol and washed. Subsequently, the solvent was removed by centrifugation and then dried to obtain ethylene-modified polyvinyl alcohol (B-2) having a viscosity average polymerization degree of 400 and a saponification degree of 98.5 mol%. The viscosity average polymerization degree and the saponification degree were measured in accordance with JIS K 6726. A methanol solution of polyvinyl acetate obtained by removing an unreacted vinyl acetate monomer after polymerization was precipitated in n-hexane and dissolved in acetone to perform reprecipitation purification three times, and then drying under reduced pressure was performed at 80°C for three days to obtain purified polyvinyl acetate. The polyvinyl acetate was dissolved in DMSO-D6, and the solution was measured at 80°C using 500 MHz proton NMR (JEOL GX-500), and the content of the ethylene unit was 10 mol%.

<Polyol plasticizer (c1)>

As the plasticizer (c1) having a Tg of 25°C or higher, the following plasticizers were used.

- Plasticizer (c1-1): Maltitol, Tg = 47°C
- Plasticizer (c1-2): Lactitol, Tg = 33°C
- Plasticizer (c1-3): Trehalose, Tg = 120°C

<Polyol plasticizer (c2)>

As the polyol (c2) having a Tg of lower than 25°C or having no Tg, the following plasticizers were used.

- Plasticizer (c2-1): Sorbitol, Tg = -4°C
- Plasticizer (c2-2): Xylitol, Tg = -23°C
- Plasticizer (c2-3): Glycerin, Tg = -75°C

<Example 1>

18.2 parts by mass (dry mass) of the modified starch (A1-1), 18.2 parts by mass of the hydrophobically modified starch (A2-1), 18.2 parts by mass (dry mass) of the hydrophobically modified starch (A2-2), 5.5 parts by mass of polyvinyl alcohol (B-1), and 40 parts by mass of the plasticizer (c1-1) were mixed, the mixture was charged into a twin screw extruder (KZW manufactured by TECHNOVEL CORPORATION) of Φ 15 mm, L/D = 45 to which a liquid pump was connected, and kneaded at a screw rotation speed of 200 rpm according to the temperature profile (Table 1) shown below, water was caused to pass through the liquid pump at C2 so that the water content of the extruded resin composition was 30% by mass, and the mixture was charged into a barrel. The resin composition extruded into a strand shape from the die was cut with a pelletizer to be formed into a pellet shape. Thereafter, drying was performed with a hot air dryer at 90°C for 72 hours. For the resulting resin composition pellet, the film formability was evaluated according to the method described in the evaluation method (4). The results are shown in Tables 2 and 3.

The obtained resin composition pellets were compression molded for 1 minute under conditions of a mold temperature of 190°C and a load of 100 kgf/cm$^2$ using a compression molding machine to produce a single layer sheet having a thickness of about 300 μm. For the obtained single layer sheet, the oxygen permeability under high humidity, the water content under high humidity, and the complex viscosity were measured according to the methods described in the evaluation methods (1) to (3). The results are shown in Tables 2 and 3.

[Table 1]

| Temperature profile [°C] | | | | | | |
|------|------|------|------|------|------|------|
| C1 | C2 | C3 | C4 | C5 | C6 | Die |
| 50 | 80 | 130 | 140 | 130 | 90 | 80 |

<Examples 2 to 13 and Comparative Examples 1 to 6>

A resin composition and a single layer sheet were produced and evaluated in the same manner as in Example 1 except that the type and content of the modified starch (A), the type and content of the PVA (B), and the type and content of the plasticizer (C) were changed as shown in Tables 2 and 3. The results are shown in Tables 2 and 3. In Comparative Example 5, since the modified starch (A1-1) and the polyvinyl alcohol (B-1) could not be melted, a single layer sheet could not be prepared by the above method. Evaluation of the film formability was performed only in Examples 1, 4, 5, 10, and 13 and Comparative Example 4.

[Table 2]

| | | Unit | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Modified starch (A1) | Type | - | A1-1 | A1-1 | A1-1 | A1-1 | A1-1 | A1-1 | A1-1 | A1-1 | A1-1 | A1-1 | A1-1 | A1-1 | A1-1 |
| | Modified group SP value | - | 13.2 | 13.2 | 13.2 | 13.2 | 13.2 | 13.2 | 13.2 | 13.2 | 13.2 | 13.2 | 13.2 | 13.2 | 13.2 |
| | Content | Part(s) by mass | 18.2 | 18.2 | 15 | 11.7 | 27.3 | 27.3 | 27.3 | 27.3 | 27.3 | 54.5 | 18.2 | 18.2 | 11.7 |
| Modified starch (A2) | Type | - | A2-1/A2-2 | A2-1/A2-2 | A2-1/A2-2 | A2-1/A2-2 | A2-2 | A2-2 | A2-2 | A2-2 | A2-1 | - | A2-1/A2-2 | A2-1/A2-2 | A2-1/A2-2 |
| | Mw | - | 170,000/32,000 | 170,000/32,000 | 170,000/32,000 | 170,000/32,000 | 32,000 | 32,000 | 32,000 | 32,000 | 170,000 | - | 170,000/32,000 | 170,000/32,000 | 170,000/32,000 |
| | Modified group SP value | - | 10.4 | 10.4 | 10.4 | 10.4 | 10.4 | 10.4 | 10.4 | 10.4 | 10.4 | - | 10.4 | 10.4 | 10.4 |
| | Content | Part(s) by mass | 18.2/18.2 | 18.2/18.2 | 15/15 | 11.7/11.7 | 27.3 | 27.3 | 27.3 | 27.3 | 27.3 | - | 18.2/18.2 | 18.2/18.2 | 11.7/11.7 |
| Polyvinyl alcohol-based re-sin (B) | Type | - | B-1 | B-2 | B-2 | B-2 | B-1 | B-1 | B-1 | B-1 | B-1 | B-1 | B-1 | B-1 | B-2 |
| | Content | Part(s) by mass | 5.5 | 5.5 | 15 | 25 | 5.5 | 5.5 | 5.5 | 5.5 | 5.5 | 5.5 | 5.5 | 5.5 | 25 |
| Polyol (c1) | Type | - | c1-1 | c1-1 | c1-1 | c1-1 | c1-1 | c1-1 | c1-1 | c1-1 | c1-1 | c1-1 | c1-2 | c1-3 | c1-1 |
| | Tg | °C | 47 | 47 | 47 | 47 | 47 | 47 | 47 | 47 | 47 | 47 | 33 | 120 | 47 |
| | Content | Part(s) by mass | 40 | 40 | 40 | 40 | 40 | 35 | 30 | 25 | 40 | 40 | 40 | 40 | 20 |
| Polyol (c2) | Type | - | - | - | - | - | - | c2-1 | c2-1 | c2-1 | - | - | - | - | c2-1 |
| | Tg | °C | - | - | - | - | - | -4 | -4 | -4 | - | - | - | - | -4 |
| | Content | Part(s) by mass | - | - | - | - | - | 5 | 10 | 15 | - | - | - | - | 20 |
| | Mass ratio (c1/C) | - | 1.00 | 1.00 | 1.00 | 1.00 | 1.00 | 0.88 | 0.75 | 0.63 | 1.00 | 1.00 | 1.00 | 1.00 | 0.5 |

EP 4 553 111 A1

18

(continued)

| | | Unit | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Evaluation | Oxygen permeability under high humidity (23°C75%RH) | cc·20 $\mu$m/ (m$^2$·day·atm) | 27 | 17 | 17 | 8 | 23 | 30 | 33 | 39 | 15 | 29 | 46 | 12 | 30 |
| | Water content under high humidity (23°C75%RH) | % by mass | 14.3 | 14.2 | 14.0 | 12.6 | 14.4 | 14.4 | 15.8 | 15.4 | 13.3 | 13.3 | 14.4 | 13.1 | 15.5 |
| | Complex viscosity (190°C, 10 rad·s$^{-1}$) | Pa·s | 6431 | 5317 | 3611 | 1984 | 7624 | 6488 | 5477 | 4846 | 10011 | 24466 | 6743 | 46543 | 1200 |
| | Film formability | - | A | - | - | A | A | - | - | - | - | B | - | - | A |

[Table 3]

| | | Unit | Comparative Example 1 | Comparative Example 2 | Comparative Example 3 | Comparative Example 4 | Comparative Example 5 | Comparative Example 6 |
|---|---|---|---|---|---|---|---|---|
| Modified starch (A1) | Type | - | A1-1 | A1-1 | A1-1 | A1-1 | A1-1 | A1-1 |
| | Modified group SP value | - | 13.2 | 13.2 | 13.2 | 13.2 | 13.2 | 13.2 |
| | Content | Part(s) by mass | 27.3 | 27.3 | 27.3 | 54.5 | 25 | 10 |
| Modified starch (A2) | Type | - | A2-2 | A2-2 | A2-2 | - | A2-1/A2-2 | A2-1/A2-2 |
| | Mw | - | 32,000 | 32,000 | 32,000 | - | 170,000/32,000 | 170,000/32,000 |
| | Modified group SP value | - | 10.4 | 10.4 | 10.4 | - | 10.4 | 10.4 |
| | Content | Part(s) by mass | 27.3 | 27.3 | 27.3 | - | 25/25 | 10/10 |
| Polyvinyl alcohol-based resin (B) | Type | - | B-1 | B-1 | B-1 | B-1 | B-1 | B-1 |
| | Content | Part(s) by mass | 5.5 | 5.5 | 5.5 | 5.5 | 5.5 | 5.5 |
| Polyol (c1) | Type | - | c1-1 | c1-1 | - | c1-1 | c1-1 | c1-1 |
| | Tg | °C | 47 | 47 | - | 47 | 47 | 47 |
| | Content | Part(s) by mass | 20 | 10 | - | 10.7 | 19.5 | 64.5 |
| Polyol (c2) | Type | - | c2-1 | c2-1 | c2-1 | c2-1/c2-2/c2-3 | - | - |
| | Tg | °C | -4 | -4 | -4 | -4/-23/-75 | - | - |
| | Content | Part(s) by mass | 20 | 30 | 40 | 16/5.3/8 | - | - |
| | Mass ratio (c1/C) | - | 0.50 | 0.25 | 0.00 | 0.27 | 1 | 1 |

(continued)

| | | Unit | Comparative Example 1 | Comparative Example 2 | Comparative Example 3 | Comparative Example 4 | Comparative Example 5 | Comparative Example 6 |
|---|---|---|---|---|---|---|---|---|
| Evaluation | Oxygen permeability under high humidity (23°C75% RH) | cc·20$\mu$m/ (m$^2$·day·atm) | 113 | 146 | 190 | 95 | - | 150 |
| | Water content under high humidity (23°C75%RH) | % by mass | 17.6 | 17.9 | 19.7 | 18.8 | - | 18.0 |
| | Complex viscosity (190°C, 10 rad·s$^{-1}$) | Pa·s | 2876 | 2400 | 1091 | 14905 | - | 715 |
| | Film formability | - | - | - | - | B | - | - |

It was confirmed that the resin composition obtained in Examples 1 to 13 was melt-moldable, and had a low oxygen permeability under high humidity (23°C, 75% RH), that is, high oxygen barrier properties, as compared with Comparative Examples 1 to 6. Therefore, the resin composition of the present invention can suppress the decrease in oxygen barrier properties under high humidity, and can be melted without adding water.

**Claims**

1. A resin composition comprising:
   a modified starch (A):

   a polyvinyl alcohol-based resin (B); and
   a polyol plasticizer (C),
   wherein a content of the polyol plasticizer (C) is 40 parts by mass or more and 150 parts by mass or less based on 100 parts by mass of a total of the modified starch (A) and the polyvinyl alcohol-based resin (B), the polyol plasticizer (C) comprises a polyol plasticizer (c1) having a Tg of 25°C or higher, and a water content after humidity conditioning at a temperature of 23°C and a relative humidity of 75% for 1 week is 17.0% by mass or less.

2. The resin composition according to claim 1, wherein a mass ratio (c1/C) of the polyol plasticizer (c1) to the polyol plasticizer (C) is 0.45 or more.

3. The resin composition according to claim 1 or 2, wherein the modified starch (A) comprises a modified starch (A1) having a modified group modified with a hydrophilic compound having an SP value of more than 11.3.

4. The resin composition according to claim 3, wherein an average amylose content of the modified starch (A1) is 50% by mass or more.

5. The resin composition according to claim 3 or 4, wherein the modified starch (A1) is at least one selected from the group consisting of etherified starch having a hydroxyalkyl group having 2 to 6 carbon atoms and esterified starch having a carboxylic anhydride-modified group having 2 to 6 carbon atoms.

6. The resin composition according to any one of claims 1 to 5, wherein the modified starch (A) comprises a modified starch (A2) having a modified group modified with a hydrophobic compound having an SP value of 11.3 or less.

7. The resin composition according to claim 6, wherein the average amylose content of the modified starch (A2) is less than 50% by mass.

8. The resin composition according to claim 6 or 7, wherein the modified starch (A2) is at least one selected from the group consisting of etherified starch having a glycidyl ether-modified group having 6 to 24 carbon atoms and esterified starch having a carboxylic anhydride-modified group having 6 to 24 carbon atoms.

9. The resin composition according to any one of claims 6 to 8, wherein the modified starch (A2) has a weight average molecular weight of 200,000 or less.

10. A film or sheet comprising at least one layer comprising the resin composition according to any one of claims 1 to 9.

| INTERNATIONAL SEARCH REPORT | International application No. |
| --- | --- |
| | **PCT/IB2023/056879** |

**A. CLASSIFICATION OF SUBJECT MATTER**

*C08L 3/06 (2006.01)   B29C 48/08 (2019.01)   B29K 29/00 (2006.01)   B29L 7/00 (2006.01)   C08J 3/18 (2006.01)   C08J 5/18 (2006.01)   C08L 3/08 (2006.01)   C08L 29/04 (2006.01)*

According to International Patent Classification (IPC) or to both national classification and IPC

**B. FIELDS SEARCHED**

Minimum documentation searched (classification system followed by classification symbols)

Documentation searched other than minimum documentation to the extent that such documents are included in the fields searched

Electronic data base consulted during the international search (name of data base and, where practicable, search terms used)

**PATENW, CAPLUS, COMPENDEX, CABA, NTIS, EMBASE, IFIALL, INSPEC, AGRICOLA, FSTA, SCISEARCH, IPC/CPC** Marks: B29K[2,4,6,]29/00/IC OR (OR C08L29/04, C08L2[3,4]29/04, C08J2329/04, B29K2[0,2]29/04, C08B31, C08L3/04, C08J2[3,4]03/04, B29K2[0,2,4,6,8]03/00, C08K5/053, C08J3/18, C08J5/18, C08L2203/16, B29C48/08, B29L2007/008, B29L27/00, C08K2201/00[2,8], Keywords: starch, polyvinyl alcohol, PVA, PVOH, plasticiser, lubricant, polyol, maltitol, lactitiol, mannitol, trehalose, mycose, tremalose, sugar alcohol, permeable, barrier, oxygen, glass transition, Tg, crystallinity and the like terms. Applicant/Inventor Search

**C. DOCUMENTS CONSIDERED TO BE RELEVANT**

| Category* | Citation of document, with indication, where appropriate, of the relevant passages | Relevant to claim No. |
| --- | --- | --- |
| | Documents are listed in the continuation of Box C | |

| [X] Further documents are listed in the continuation of Box C | [X] See patent family annex |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 29 September 2023 | 29 September 2023 |

| Name and mailing address of the ISA/AU | Authorised officer |
| --- | --- |
| AUSTRALIAN PATENT OFFICE<br>PO BOX 200, WODEN ACT 2606, AUSTRALIA<br>Email address: pct@ipaustralia.gov.au | Giuseppe Zagari<br>AUSTRALIAN PATENT OFFICE<br>(ISO 9001 Quality Certified Service)<br>Telephone No. +61 2 6283 3130 |

Form PCT/ISA/210 (fifth sheet) (July 2019)

| | INTERNATIONAL SEARCH REPORT | International application No. |
|---|---|---|
| C (Continuation). | DOCUMENTS CONSIDERED TO BE RELEVANT | **PCT/IB2023/056879** |

| Category* | Citation of document, with indication, where appropriate, of the relevant passages | Relevant to claim No. |
|---|---|---|
| X | US 20070276317 A1 (Henderson et al.) 29 November 2007<br>abstract; para 15-21, 24, 25-28, 34, 36, 64, 66, 97; Table 1; Examples 1 and 12; Tables 1, 3, 4, 6 | 1, 3-10 |
| X | US 20090312462 A1 (Oakley et al.) 17 December 2009<br>abstract; para 13-18, 28-32, 34, 37, 45-48; Table 3 | 1-10 |
| X | US 20100297458 A1 (Khemani et al.) 25 November 2010<br>abstract; para 10-14, 20-23, 29-43; Examples 3 and 16 | 1-10 |
| X | US 20090110942 A1 (Henderson-Rutgers et al.) 30 April 2009<br>abstract, para 21-27, 30, 33-40, 42-50, 60, 91; Table 1, Examples | 1, 3-10 |
| A | US 20200339785 A1 (Plantic Technologies Ltd.) 29 October 2020<br>whole document | |
| A | US 20190284356 A1 (Mitsubishi Chemical Corporation) 19 September 2019<br>whole document | |

Form PCT/ISA/210 (fifth sheet) (July 2019)

| INTERNATIONAL SEARCH REPORT | | International application No. |
|---|---|---|
| Information on patent family members | | **PCT/IB2023/056879** |

This Annex lists known patent family members relating to the patent documents cited in the above-mentioned international search report. The Australian Patent Office is in no way liable for these particulars which are merely given for the purpose of information.

| Patent Document/s Cited in Search Report | | Patent Family Member/s | |
|---|---|---|---|
| **Publication Number** | **Publication Date** | **Publication Number** | **Publication Date** |
| US 20070276317 A1 | 29 November 2007 | US 2007276317 A1 | 29 Nov 2007 |
| | | US 8569402 B2 | 29 Oct 2013 |
| | | AU 2005291831 A1 | 13 Apr 2006 |
| | | AU 2005291831 B2 | 11 Nov 2010 |
| | | CA 2582948 A1 | 13 Apr 2006 |
| | | CN 101061167 A | 24 Oct 2007 |
| | | CN 101061167 B | 15 Dec 2010 |
| | | EP 1799762 A1 | 27 Jun 2007 |
| | | EP 1799762 B1 | 05 Jul 2017 |
| | | JP 2014028963 A | 13 Feb 2014 |
| | | JP 5669906 B2 | 18 Feb 2015 |
| | | JP 2008516016 A | 15 May 2008 |
| | | KR 20070084032 A | 24 Aug 2007 |
| | | NZ 554681 A | 28 May 2010 |
| | | WO 2006037157 A1 | 13 Apr 2006 |
| US 20090312462 A1 | 17 December 2009 | US 2009312462 A1 | 17 Dec 2009 |
| | | US 8410200 B2 | 02 Apr 2013 |
| | | AU 2007240124 A1 | 25 Oct 2007 |
| | | AU 2007240124 B2 | 18 Sep 2014 |
| | | CN 101426845 A | 06 May 2009 |
| | | CN 104945683 A | 30 Sep 2015 |
| | | EP 2007831 A1 | 31 Dec 2008 |
| | | EP 2007831 B1 | 12 Jun 2019 |
| | | JP 2009533538 A | 17 Sep 2009 |
| | | JP 5571376 B2 | 13 Aug 2014 |
| | | WO 2007118280 A1 | 25 Oct 2007 |
| US 20100297458 A1 | 25 November 2010 | US 2010297458 A1 | 25 Nov 2010 |
| | | US 8697245 B2 | 15 Apr 2014 |
| | | AU 2007281047 A1 | 07 Feb 2008 |
| | | AU 2007281047 B2 | 07 Nov 2013 |
| | | CN 101506291 A | 12 Aug 2009 |
| | | CN 101506291 B | 04 Dec 2013 |
| | | EP 2046885 A1 | 15 Apr 2009 |
| | | EP 2046885 B1 | 13 Nov 2019 |
| | | JP 2013216918 A | 24 Oct 2013 |

Due to data integration issues this family listing may not include 10 digit Australian applications filed since May 2001.

Form PCT/ISA/210 (Family Annex)(July 2019)

| INTERNATIONAL SEARCH REPORT | International application No. |
|---|---|
| Information on patent family members | **PCT/IB2023/056879** |

This Annex lists known patent family members relating to the patent documents cited in the above-mentioned international search report. The Australian Patent Office is in no way liable for these particulars which are merely given for the purpose of information.

| Patent Document/s Cited in Search Report | | Patent Family Member/s | |
|---|---|---|---|
| **Publication Number** | **Publication Date** | **Publication Number** | **Publication Date** |
| | | JP 5686866 B2 | 18 Mar 2015 |
| | | JP 2009545658 A | 24 Dec 2009 |
| | | WO 2008014573 A1 | 07 Feb 2008 |
| US 20090110942 A1 | 30 April 2009 | US 2009110942 A1 | 30 Apr 2009 |
| | | US 7854994 B2 | 21 Dec 2010 |
| | | AU 2005297323 A1 | 27 Apr 2006 |
| | | AU 2005297323 B2 | 25 Nov 2010 |
| | | CA 2583945 A1 | 27 Apr 2006 |
| | | CN 101360783 A | 04 Feb 2009 |
| | | CN 101360783 B | 06 Apr 2011 |
| | | EP 1802698 A1 | 04 Jul 2007 |
| | | EP 1802698 B1 | 25 Apr 2012 |
| | | IL 182416 A | 24 Mar 2013 |
| | | JP 2015042745 A | 05 Mar 2015 |
| | | JP 6066970 B2 | 25 Jan 2017 |
| | | JP 2008517108 A | 22 May 2008 |
| | | KR 20070088638 A | 29 Aug 2007 |
| | | NZ 554682 A | 30 Apr 2010 |
| | | WO 2006042364 A1 | 27 Apr 2006 |
| US 20200339785 A1 | 29 October 2020 | US 2020339785 A1 | 29 Oct 2020 |
| | | US 11578193 B2 | 14 Feb 2023 |
| | | AU 2018292709 A1 | 16 Jan 2020 |
| | | AU 2018292709 B2 | 15 Sep 2022 |
| | | BR 112019027470 A2 | 07 Jul 2020 |
| | | BR 112019027470 B1 | 29 Nov 2022 |
| | | CN 110945067 A | 31 Mar 2020 |
| | | CN 110945067 B | 31 Mar 2023 |
| | | EP 3647350 A1 | 06 May 2020 |
| | | JP WO2019003077 A1 | 18 Jun 2020 |
| | | JP 7050778 B2 | 08 Apr 2022 |
| | | JP 2019006900 A | 17 Jan 2019 |
| | | WO 2019003077 A1 | 03 Jan 2019 |
| US 20190284356 A1 | 19 September 2019 | US 2019284356 A1 | 19 Sep 2019 |
| | | US 11034807 B2 | 15 Jun 2021 |
| | | CN 110036069 A | 19 Jul 2019 |

Due to data integration issues this family listing may not include 10 digit Australian applications filed since May 2001.

Form PCT/ISA/210 (Family Annex)(July 2019)

| INTERNATIONAL SEARCH REPORT | | International application No. |
|---|---|---|
| Information on patent family members | | **PCT/IB2023/056879** |

This Annex lists known patent family members relating to the patent documents cited in the above-mentioned international search report. The Australian Patent Office is in no way liable for these particulars which are merely given for the purpose of information.

| Patent Document/s Cited in Search Report | | Patent Family Member/s | |
|---|---|---|---|
| **Publication Number** | **Publication Date** | **Publication Number** | **Publication Date** |
| | | CN 110036069 B | 08 Mar 2022 |
| | | EP 3564304 A1 | 06 Nov 2019 |
| | | JP WO2018123892 A1 | 31 Oct 2019 |
| | | JP 6977564 B2 | 08 Dec 2021 |
| | | WO 2018123892 A1 | 05 Jul 2018 |

**End of Annex**

Due to data integration issues this family listing may not include 10 digit Australian applications filed since May 2001.
Form PCT/ISA/210 (Family Annex)(July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022107887 A
- JP 2022107893 A
- JP 2019006900 A
- JP 2014028963 A

**Non-patent literature cited in the description**

- *Polym. Eng. Sci.*, 1974, vol. 14 (2), 147
- *Starch*, 1998, vol. 50 (4), 158-163